# EUROPÄISCHE PATENTSCHRIFT

(11) **EP 1 552 176 B1**
(45) Veröffentlichungstag und Bekanntmachung des Hinweises auf die Patenterteilung: **05.07.2006**
(21) Anmeldenummer: 03809278.9
(22) Anmeldetag: 11.10.2003
(51) Int. Cl.: F16D 27/00

(54) **STELLEINRICHTUNG FÜR EINE KUPPLUNG**
ACTUATING DEVICE FOR A CLUTCH
DISPOSITIF DE REGLAGE DESTINE A UN EMBRAYAGE

(30) Priorität: 19.10.2002 DE 10248829
(43) Veröffentlichungstag der Anmeldung: 13.07.2005
(73) Patentinhaber: ZF FRIEDRICHSHAFEN Aktiengesellschaft, 88038 Friedrichshafen (DE)
(72) Erfinder: LANGWALD, Olaf, 88099 Neukirch (DE)
(86) Internationale Anmeldenummer: PCT/EP2003/011280
(87) Internationale Veröffentlichungsnummer: WO 2004/038248

(56) Entgegenhaltungen:
- WO-A-01/88402
- US-A- 4 895 236
- US-A- 5 024 638

## Beschreibung

Die Erfindung betrifft eine Stelleinrichtung für Kupplungen nach dem Oberbegriff von Anspruch 1.

Fahrzeuge mit automatisierten Schaltgetrieben und automatisierten Kupplungen sind seit längerer Zeit am Markt vorhanden. Bevorzugter Einsatzbereich sind hier kommerziell genutzte Fahrzeuge, wie Pkw, Transporter oder Lkw. In der jüngeren Vergangenheit werden vermehrt PKW in sportlichen Anwendungen oder Kleinwagen mit solchen Getrieben und Kupplungen ausgerüstet. Ziel ist es, den Fahrer vom Gangwechsel zu entlasten und insgesamt einen komfortableren und sichereren Betrieb zu ermöglichen. Fahrzeuge mit solchen Getrieben verfügen üblicherweise über zwei Pedale als Fahrpedal und Bremse. Das Kupplungspedal kann entfallen. Im Fahrzeug steht ein Fahrschalter zur Wahl der Betriebsart zur Verfügung. Hier kann zwischen Automatikmodus, Handschaltmodus und Rückwärtsgang gewählt werden. Ist der Automatikmodus gewählt, erfolgt die Übersetzungsanpassung automatisch. Insbesondere im NKW-Bereich existieren verschiedene Lösungen für die Automatisierung von Schaltgetrieben und Kupplungen. So gibt es verschiedene Varianten, wie beispielsweise pneumatische, hydraulische oder rein elektrische Systeme. Welche Variante gewählt wird hängt im wesentlichen von der Fahrzeugklasse und der damit verfügbaren Energiearten in diesem Fahrzeug ab. Weiterhin ist der Leistungsbedarf der verwendeten Aktuatoren eine wichtige Kenngröße. Als Aktuatoren werden systemabhängig Pneumatik- oder Hydraulikzylinder oder Elektromotoren verwendet, die über Getriebe die Wähl- und Schalteinrichtungen und die Stelleinrichtungen für die Kupplung antreiben. Aktuatoren, die von Elektromotoren angetrieben werden, stellen besonders kostengünstige Konstruktionen dar.

Bei dem Kupplungsvorgang notwendige Kraftspeicher zur Leistungsunterstützung werden in Verbindung mit der Verwendung einer Kugelumlaufspindel als Antriebselement üblicherweise neben der Kugelumlaufspindel oder die Kugelumlaufspindel umschließend angeordnet. Ist der Kraftspeicher neben der Kugelumlaufspindel angeordnet, so muss die Kraft mittels Hebeln umgelenkt werden. Umschließt jedoch der Kraftspeicher die Kugelumlaufspindel, so ist der Durchmesser der Kugelumlaufspindel maßgeblich an der Größenauslegung des Kraftspeichers, gegeben durch den Federinnendurchmesser, beteiligt.
Die bisherigen Lösungen bei der Verwendung von Wegsensoren in Verbindung mit Kugelumlaufspindel sehen so aus, dass die Anordnung des Wegsensors parallel zur Kugelumlaufspindel oder in einer parallelen Lage zu einem anderen Bauteil erfolgen muss. Ist der Wegsensor parallel zur Kugelumlaufspindel angeordnet, so wird zusätzlicher Bauraum benötigt und die Anbringung des Übertragungsmediums, beispielsweise des Magneten, ist schwierig. Ist der Wegsensor parallel zu einem anderen Bauteil angeordnet, so muss sich dieses Bauteil auf der gleichen Wirkachse wie die Kugelumlaufspindel befinden. Dadurch verlängert sich der für die Konstruktion benötigte Bauraum.

Aus der DE 44 33 824 C2 ist beispielgebend eine Stelleinrichtung für eine Kraftfahrzeug-Reibungskupplung bekannt geworden, die einen Antrieb und ein die Bewegung der Antriebswelle desselben in eine im wesentlichen translatorische Bewegung eines Ausgangsgliedes umsetzendes Kurbelgetriebe aufweist. Das Kurbelgetriebe ist als Schneckengetriebe mit einer auf der Antriebswelle sitzenden und mit einem Zahnsegment eines in einem Gehäuse drehbar gelagertes Segment-Schneckenzahnrades kämmenden Schnecke ausgebildet. Am Segment-Schneckenzahnrad greift seitlich ein Vorspannelement mit einer Federvorrichtung an. Die Federvorrichtung federt außerhalb einer vorbestimmbaren Totpunktlage unter Entspannung aus, wobei die Ausfederrichtung derart gewählt ist, dass die Federkraft zumindest eine wesentliche Komponente in Auslenkrichtung der Anpressfeder der Reibungskupplung aufweist, die durch das Ausgangsglied, das als hydraulischer Geberzylinder ausgebildet ist, über einen nicht gezeigten Nehmerzylinder aus ihrer Wirkstellung auslenkbar ist. Dadurch unterstützt die Federvorrichtung des Vorspannelementes als ein Kraftspeicher den Antrieb bei dessen Bewegung, so dass der Antrieb relativ schwach ausgebildet sein kann.

Aus der US-A-5 024 638 schließlich ist eine Stelleinrichtung für eine Lamellenkupplung innerhalb eines Getriebes bekannt, die von einem Elektromotor über eine Kugelumlaufspindel betätigt wird. Die Kugelumlaufspindel setzt die Drehbewegung des Elektromotors in eine translatorische Bewegung um und wirkt dabei auf eine konische Feder ein, die in ihrem nicht betätigten Zustand die Lamellen der Lamellenkupplung zusammendrückt, damit diese ein Drehmoment übertragen können. Durch die Betätigung der Kugelumlaufspindel wird die Anpresskraft der konischen Feder von den Lamellen abgenommen und die Kupplung öffnet, was die Drehmomentübertragung unterbricht. Die konische Feder stellt keinen Kraftspeicher zur Leistungsunterstützung dar, wie er bei einer mit einem Elektromotor erfolgenden Betätigung einer Kupplung zwischen einem Antriebsmotor und einem Getriebe in einem Fahrzeug benötigt wird. Dort ist die vom Elektromotor aktuell bei der Betätigung erzeugte Kraft zu gering und muss unterstützt werden.

Der Erfindung liegt die Aufgabe zugrunde, an einer Stelleinrichtung für eine Kupplung den Kraftspeicher platzsparend anzuordnen.

Die Aufgabe wird gelöst durch eine Stelleinrichtung mit den Merkmalen des Anspruchs 1. Ausgestaltungen sind Gegenstand von Unteransprüchen.

Eine Stelleinrichtung für eine Kupplung eines Kraftfahrzeuges umfasst einen Elektromotor, ein die Drehbewegung des Elektromotors in eine translatorische Bewegung umsetzendes Getriebe und einen Kraftspeicher. Nach der Erfindung umfasst das umsetzende Getriebe eine Kugelumlaufspindel und innerhalb dieser Kugelumlaufspindel ist der Kraftspeicher wenigstens teilweise angeordnet. Dazu ist die Kugelumlaufspindel in einer bevorzugten Ausgestaltungsform hohl ausgebildet. Vorteilhafterweise umfasst der Kraftspeicher wenigstens eine Spiralfeder, in einer alternativen Ausführungsform kann der Kraftspeicher aber auch aus mehreren Spiralfedern gebildet sein, wobei eine Ausgestaltung die mehreren Spiralfedern dann radial ineinanderliegend ausgebildet aufweist. Bevorzugt ist der Außendurchmesser der Spiralfeder bzw. des Kraftspeichers im wesentlichen gleich dem Innendurchmesser der Kugelumlaufspindel. In einer vorteilhaften Ausgestaltung bildet die Kugelumlaufspindel den Geberzylinder bei einer von einem Fluid betätigten Kupplung, die einen Geberzylinder für das Fluid an der Stelleinrichtung, einen Nehmerzylinder für das Fluid an der Kupplung und eine dazwischenliegende Fluid-Leitung umfasst. Als Fluid kommen Hydrauliköl oder Luft in Betracht. In besonders bevorzugter Ausbildung der Erfindung sind wenigstens Teile eines Wegsensors innerhalb der Kugelumlaufspindel angeordnet. Dazu dient der ungenutzte Raum zwischen den Federn oder, je nach Leistungsunterstützung, im Ölbad oder im Luftdruckraum.

Durch die vorgeschlagene Ausgestaltung ist der leistungsunterstützende Kraftspeicher ganz oder zumindest teilweise in den Spindelinnenraum verlegt. Der Kraftspeicher kann kleiner ausgelegt werden und eine Hebelumlenkung zur Umlenkung der Kraft kann entfallen. Der Gesamtbauraum der Stelleinrichtung kann kleiner werden. Da die Kraftspeicher nunmehr nicht länger an der Oberfläche der Kugelumlaufspindel angreifen, können von außen andere Funktionalitäten auf die Kugelumlaufspindel bzw. auf deren Fortsätze einwirken. Dies können beispielsweise Verdrehsicherungen, Dreh- und Wegsensoren, Lagerungen oder Dichtungselemente sein.

Die Erfindung wird anhand einer Zeichnung näher erläutert.
Es zeigen:
- Fig. 1: eine schematische Darstellung eines Fahrzeugs und
- Fig. 2: eine Stelleinrichtung teilweise geschnitten

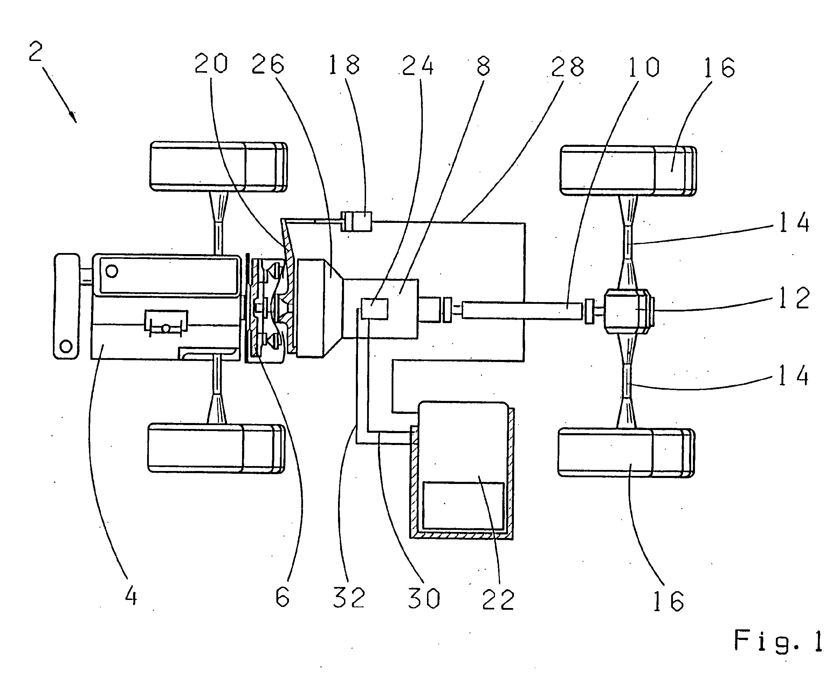

Die Fig. 1 zeigt eine schematische Darstellung eines Fahrzeugs 2 mit einem Antriebsmotor 4, der über eine Reibungskupplung 6 auf ein Getriebe 8 einwirkt. Das Getriebe 8 ist über eine Antriebswelle 10 mit einem Differential 12 verbunden, das über je eine Halbachse 14 ein Fahrzeugrad 16 antreibt. Die Reibungskupplung 6 wird von einer Stelleinrichtung 18 einer Kupplungsverstellvorrichtung 20 betätigt, der über eine Leitung 28 mit einem Modul 22 verbunden ist. Das Getriebe 8 wird von einem Getriebesteller 24 einer Schalteinrichtung betätigt, der an dem Gehäuse 26 des Getriebes 8 angeordnet ist und der über einen Seilzug 30 zur Durchführung einer Wählbewegung und über einen Seilzug 32 zur Durchführung einer Schaltbewegung mit dem Modul 22 verbunden ist.

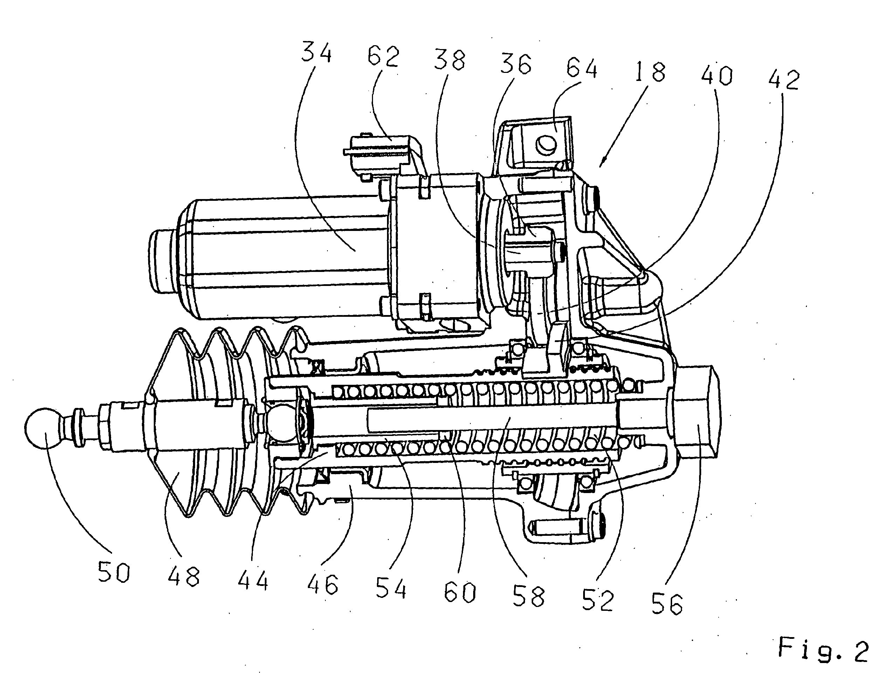

Die in Fig. 2 gezeigte Stelleinrichtung 18 weist einen Elektromotor 34 auf, der mit einem Zahnrad 36 auf seiner Ausgangswelle 38 über ein Zwischenrad 40 eine Spindelmutter 42 antreibt. Der Elektromotor 34 ist über einen Anschlussstecker 62 mit dem Modul 22 verbunden, woher er seine Energieversorgung und seine Steuerbefehle bezieht. Der Elektromotor 34 bzw. die Stelleinrichtung 18 sind mit einem Gehäuseflansch 64 versehen, durch den sie mit dem Getriebe 8 oder einem sonstigen Karosserieteil des Fahrzeugs 2 verbunden sind.

Die Spindelmutter 42 sitzt außen auf einer hohlen Kugelumlaufspindel 44. Die Kugelumlaufspindel 44 ist in einem Gehäuseteil 46 der Stelleinrichtung 18 angeordnet, der an einem Ende einen Gummibalg 48 aufweist, in dem eine Stellstange 50 abgedichtet und axialverschiebbar aufgenommen ist. Die Stellstange 50 ist mit der Kugelumlaufspindel 44 verbunden und wird bei deren axialer Bewegung mit dieser axial verschoben und kann dadurch die Kupplungsverstellvorrichtung 20 betätigen.

Innerhalb der Kugelumlaufspindel 44 ist als ein Kraftspeicher eine Spiralfeder 52 vorgesehen, deren Außendurchmesser etwa dem Innendurchmesser der hohlen Kugelumlaufspindel 44 entspricht. Eine in der Kugelumlaufspindel 44 befestigte Hülse 54, die mit ihrer äußeren Oberfläche die Spiralfeder 52 zwischen sich und der Kugelumlaufspindel 44 fixiert, nimmt an ihrer Innenseite die Sensorspitze 58 eines Wegsensors 56 auf. Diese Sensorspitze 58 greift durch einen Sensormagneten 60 hindurch, der an der Hülse 54 angeordnet ist. Beim Verschieben der Kugelumlaufspindel 44 bewegt sich die Hülse 54 und damit der Sensormagnet 60 an der Sensorspitze 58 entlang. Diese Bewegungssignale werden im Wegsensor 56 aufgenommen und an das Modul 22 weitergeleitet.

### Bezugzeichen

- 2: Fahrzeug
- 4: Antriebsmotor
- 6: Reibungskupplung
- 8: Getriebe
- 10: Antriebswelle
- 12: Differential
- 14: Halbachse
- 16: Fahrzeugrad
- 18: Stelleinrichtung
- 20: Kupplungsverstellvorrichtung
- 22: Modul
- 24: Getriebesteller
- 26: Gehäuse
- 28: Leitung
- 30: Seilzug
- 32: Seilzug
- 34: Elektromotor
- 36: Zahnrad
- 38: Ausgangswelle
- 40: Zwischenrad
- 42: Spindelmutter
- 44: Kugelumlaufspindel
- 46: Gehäuseteil
- 48: Gummibalg
- 50: Stellstange
- 52: Spiralfeder
- 54: Hülse
- 56: Wegsensor
- 58: Sensorspitze
- 60: Sensormagnet
- 62: Anschlussstecker
- 64: Gehäuseflansch

## Patentansprüche

1. Stelleinrichtung (18) für eine Kupplung (6) eines Kraftfahrzeuges (2) zwischen einem Antriebsmotor (4) und einem Getriebe (8), die einen Elektromotor (34), ein die Drehbewegung des Elektromotors (34) in eine translatorische Bewegung umsetzendes Getriebe (36, 40, 42, 44) und einen Kraftspeicher (52) zur Leistungsunterstützung umfasst, **dadurch gekennzeichnet, dass** das umsetzende Getriebe eine Kugelumlaufspindel (44) umfasst und der Kraftspeicher (52) zur Leistungsunterstützung wenigstens teilweise innerhalb der Kugelumlaufspindel (44) angeordnet ist.

2. Stelleinrichtung (18) nach Anspruch 1, **dadurch gekennzeichnet, dass** die Kugelumlaufspindel (44) hohl ausgebildet ist.

3. Stelleinrichtung (18) nach Anspruch 1 oder 2, **dadurch gekennzeichnet, dass** der Kraftspeicher wenigstens eine Spiralfeder (52) umfasst.

4. Stelleinrichtung (18) nach Anspruch 3, **dadurch gekennzeichnet, dass** der Kraftspeicher aus mehreren Spiralfedern (52) gebildet ist.

5. Stelleinrichtung (18) nach Anspruch 4, **dadurch gekennzeichnet, dass** die mehreren Spiralfedern (52) radial ineinanderliegend ausgebildet sind.

6. Stelleinrichtung (18) nach einem der Ansprüche 1 bis 5, **dadurch gekennzeichnet, dass** der Außendurchmesser des Kraftspeichers (52) im wesentlichen gleich dem Innendurchmesser der Kugelumlaufspindel (44) ist.

7. Stelleinrichtung (18) nach Anspruch 1 oder 2, **dadurch gekennzeichnet, dass** bei einer von einem Fluid betätigten Kupplung (6) zwischen einem Antriebsmotor (4) und einem Getriebe (8), die einen Geberzylinder für das Fluid an der Stelleinrichtung (18), einen Nehmerzylinder für das Fluid an der Kupplung (6) und eine dazwischenliegende Fluid-Leitung umfasst, die Kugelumlaufspindel (44) den Geberzylinder bildet.

8. Stelleinrichtung (18) nach einem der Ansprüche 1 bis 7, **dadurch gekennzeichnet, dass** innerhalb der Kugelumlaufspindel (44) wenigstens Teile (58, 60) eines Wegsensors (56) angeordnet sind.

## Claims

1. The invention relates to a control system (18) for a dutch (6) of a motor vehicle (2) between a driving engine (4) and a transmission (8), with the control system comprising an electric motor (34) and a transmission (36, 40, 42, 44), which converts the rotary motion of the electric motor (34) into a translational motion, and an energy storer (52) for power assistance, **characterized in that** the converting transmission comprises a recirculating ball screw (44) and that the energy storer (52) for power assistance is arranged at least partially within the recirculating ball screw (44).

2. A control system (18) according to claim 1, **characterized in that** the recirculating ball screw (44) is hollow.

3. A control system (18) according to claim 1 or 2, **characterized in that** the energy storer comprises at least one spiral spring (52).

4. A control system (18) according to claim 3, **characterized in that** the energy storer comprises several spiral springs (52).

5. A control system (18) according to claim 4, **characterized in that** the spiral springs (52) fit into one another radially.

6. A control system (18) according to one of the claims 1 through 5, **characterized in that** the outer diameter of the energy storer (52) is essentially equal to the inner diameter of the recirculating ball screw (44).

7. A control system (18) according to claim 1 or 2, **characterized in that** in a fluid-controlled clutch (6) between a driving engine (4) and a transmission (8), which comprises a master cylinder for the fluid of the control system (18), a slave cylinder for the fluid of the dutch (6), and an interposed fluid line, the master cylinder is constituted by the recirculating ball screw (44).

8. A control system (18) according to one of the claims 1 through 7, **characterized in that** at least parts (58, 60) of a travel sensor (56) are arranged within the rearculating ball screw (44).

## Revendications

1. Servodispositif (18) pour un embrayage (6) d'un véhicule automobile (2) interposé entre un moteur d'entraînement (4) et une transmission (8), qui comprend un moteur électrique (34), un renvoi (36, 40, 42, 44) qui convertit un mouvement de rotation du moteur électrique (34) en un mouvement de translation, et un accumulateur de force (52) pour l'assistance de puissance, **caractérisé en ce que** le renvoi convertisseur comprend une vis à circulation de billes (44) et l'accumulateur de force (52) pour l'assistance de puissance est disposé au moins en partie à l'intérieur de la vis à circulation de billes (44).

2. Servodispositif (18) selon la revendication 1, **caractérisé en ce que** la vis à circulation de billes (44) est creuse.

3. Servodispositif (18) selon la revendication 1 ou 2, **caractérisé en ce que** l'accumulateur de force comprend au moins un ressort hélicoïdal (52).

4. Servodispositif (18) selon la revendication 3, **caractérisé en ce que** l'accumulateur de force est composé de plusieurs ressorts hélicoïdaux (52).

5. Servodispositif (18) selon la revendication 4, **caractérisé en ce que** les plusieurs ressorts hélicoïdaux (52) sont disposés radialement l'un à l'intérieur de l'autre.

6. Servodispositif (18) selon l'une des revendications 1 à 5, **caractérisé en ce que** le diamètre extérieur de l'accumulateur de force (52) est sensiblement égal au diamètre intérieur de la vis à circulation de billes (44).

7. Servodispositif (18) selon la revendication 1 ou 2, **caractérisé en ce que**, dans le cas d'un embrayage (6) actionné par fluide interposé entre un moteur d'entraînement (4) et une transmission (8), qui comprend un cylindre émetteur pour le fluide sur le servodispositif (18), un cylindre récepteur pour le fluide sur l'embrayage (6), et une conduite de fluide interposée, la vis à circulation de billes (44) forme le cylindre émetteur.

8. Servodispositif (18) selon l'une des revendications 1 à 7, **caractérisé en ce qu'**au moins des parties (58, 60) d'un capteur de course (56) sont disposées à l'intérieur de la vis à circulation de billes (44).
